Europäisches Patentamt

European Patent Office

Office européen des brevets

Publication number: **0 367 284**

**A2**

# EUROPEAN PATENT APPLICATION

Application number: 89120392.9

Int. Cl.5 **G06F 13/38 , G06F 13/12**

Date of filing: 03.11.89

Priority: 04.11.88 US 267477

Date of publication of application:
09.05.90 Bulletin 90/19

Designated Contracting States:
DE FR GB NL

Applicant: TEKTRONIX, INC.
Howard Vollum Park 14150 Karl Braun Drive
P.O. Box 500
Beaverton Oregon 97077(US)

Inventor: Hillen, Kenneth K.
18445, S.W. Lapaz Court
Aloha Oregon 97005(US)
Inventor: Shaver, Christopher D.
7040 S.W. Elmhurst
Tigard Oregon 97223(US)

Representative: Liska, Horst, Dr. et al
Patentanwälte H. Weickmann, Dr. K. Fincke,
F.A. Weickmann, B. Huber, Dr. H. Liska, Dr. J.
Prechtel Möhlstrasse 22 Postfach 86 08 20
D-8000 München 86(DE)

Reconfigurable output port.

A reconfigurable port selectively provides an interface between a computer and any one of several output devices requiring differing interface arrangements including differing external bus configurations, differing input and output data formats, and differing handshaking protocols. Before communicating with any selected one of the output devices through the port, the computer sends programming data configuring the port to provide the correct interface for the selected output device and to appropriately connect input and outputs terminals of the port to the selected device.

FIG.1

## RECONFIGURABLE OUTPUT PORT

### Background of the Invention

The present invention relates in general to an output port for a computer and in particular to a port that may be selectively configured by the computer to provide an interface between the computer and output devices requiring a variety of different interface arrangements for receiving data from and transmitting data to a computer.

A computer typically communicates with an output device such as a printer through a port connected to the computer's bus. When the computer sends data over the bus to a particular bus address associated with the port, the port converts the data to a form suitable for transmission to the output device and forwards the converted data to the output device. The port may also convey status, alarm or other data from the output device to the computer, usually by storing the incoming data in a register, interrupting the computer, and allowing the computer to read access the register through the bus.

Output devices require a wide variety of interface arrangements for communicating with a computer including various input/output data formats, external bus configurations and handshaking protocols. To provide an interface between any particular output device and a computer, a port must provide the appropriate logic to convert input data to a form expected by the output device or the computer, must have appropriate input/output terminals for the external busses of the computer and the output device and must include suitable internal logic to provide appropriate handshaking protocol for those busses. When a computer system communicates with several output devices having similar interface requirements, a manual or computer operable switch may selectively connect any one of the output devices to a single port. However, when a computer drives several output devices requiring differing interface arrangements, the computer must employ a separate port for each output device. Multiple ports are expensive and occupy scarce space within a computer chassis.

### Summary of the Invention

In accordance with one aspect of the invention, a reconfigurable port selectively provides an interface between a computer and any of several output devices requiring differing interface arrangements. Before communicating with any selected one of the output devices, the computer sends programming data configuring the port to provide the correct interface for the selected output device and to appropriately connect input and outputs terminals of the port to the selected device. The computer then communicates with the selected output device through the port.

In accordance with another aspect of the invention, a programmable gate array within the port provides the necessary handshaking, data routing and conversion logic for the port. The programming data programs the gate array to operate in a manner appropriate for the selected output device.

It is accordingly an object of the invention to provide a programmable output port permitting a computer to communicate with any of many different types of output devices requiring differing interface arrangements.

The subject matter of the present invention is particularly pointed out and distinctly claimed in the concluding portion of this specification. However, both the organization and method of operation of the invention, together with further advantages and objects thereof, may best be understood by reference to the following description taken with the accompanying drawings wherein like reference characters refer to like elements.

### Brief Description of the Drawings

FIG. 1 is a functional block diagram of the reconfigurable port of the present invention;

FIG. 2 illustrates the interrupt circuit of FIG. 1 in more detailed block diagram form;

FIG. 3 is a block diagram illustrating an example output device and an example configuration of the port of FIG. 1 for communicating with the output device;

FIGS. 4 and 5 are state diagrams illustrating operations of the state machine of FIG. 3;

FIG. 6 is a flow chart illustrating an idle loop performed by the computer of FIG. 1 for monitoring status of several different output devices; and

FIG. 7 is a flow chart illustrating an interrupt routine executed by the computer of FIG. 1 for servicing an output data request.

### Description of the Preferred Embodiment

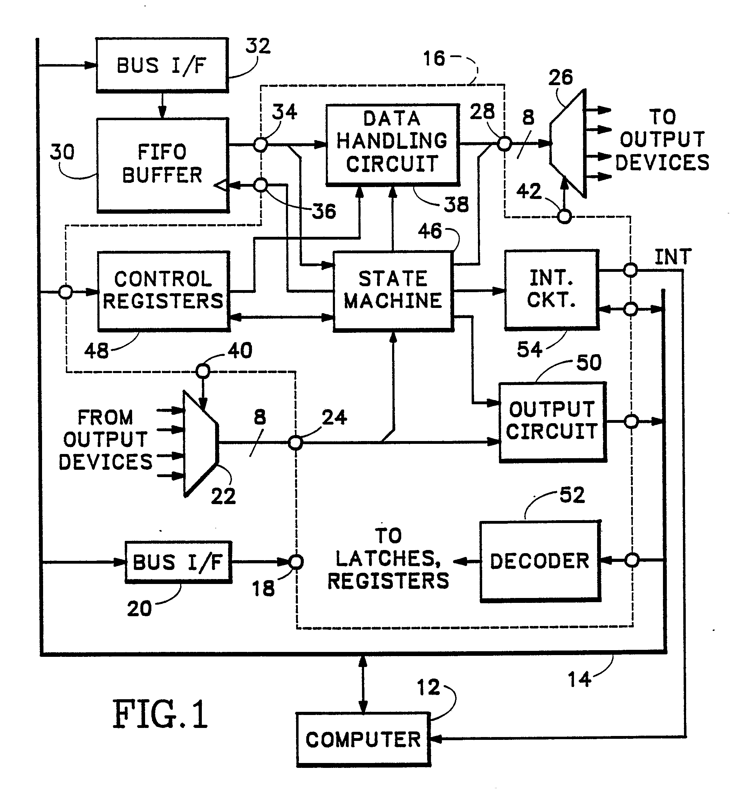

Referring to FIG. 1, a port 10 provides a computer 12 with selective access to any of several output devices (not shown). An output device, such as for example a printer, receives input data or commands from the computer and may transmit status, alarm or other data to the computer in response to input commands. Output devices may require differing interface arrangements for transmitting and receiving data from a computer including for example, differing external bus configurations, differing input and output data formats, and differing handshaking protocols. Before communicating with a selected one of the output devices, computer 12 sends programming data to port 10 via a bus 14. The programming data configures port 10 to provide the correct interface for the selected output device and appropriately connects input and output terminals of the port to input and output lines of the selected output device. After appropriately configuring port 10, computer 12 communicates with the selected output device through the port. Thereafter, before communicating with any other output device, the computer reconfigures the port to provide the correct interface for the other output device.

A programmable gate array 16 within port 10 provides the necessary handshaking, data routing and data conversion logic for the port. (Gate array 16 is illustrated in FIG. 1 as implementing the circuits shown within the dotted line.) Gate array 16 suitably comprises a model XC2018 Logic Cell Array manufactured by XILINX, Inc. This device, described in detail in The Programmable Gate Array Design Handbook, published in 1986 by Xilinx, Inc., comprises an array of 100 configurable logic blocks and a set of 74 configurable I/O blocks. Each I/O block selectively provides an input or output interface between an external package pin and the logic block array. Each logic block has a combinatorial logic section, a storage element and a routing and control section. The combinatorial logic section produces an output which is a programmably selected Boolean function of up to four single bit inputs. The storage element in each logic block acts selectively as a flip-flop or a latch and may be employed to delay or store a data bit generated or received by the logic block. The internal routing and control section of each logic block adjustably interconnects the combinatorial logic section, the storage element and input and output terminals of the logic block. Programmably alterable routing circuitry within the gate array selectively connects input and output terminals of the various I/O and logic blocks to form a desired logic circuit.

Computer 12 programs gate array 16 by transmitting to the gate array a sequence of programming data specifying I/O blocks to act as inputs and outputs, specifying the Boolean function performed by each logic block, specifying data routing paths within and between the logic blocks and specifying other configurable aspects of the gate array. Computer 12 supplies programming data and control signals to programming input terminals 18 of gate array 16 via a conventional bus interface circuit 20.

In addition to gate array 16, port 10 includes an input multiplexer 22 connecting up to eight lines from a selected one of a plurality of output devices to input terminals 24 of gate array 16. An output multiplexer 26 connects up to eight output terminals 28 of gate array 16 to various lines of any selected one of the output devices. Port 10 also includes a first-in/first-out (FIFO) buffer 30 coupled to bus 14 through a conventional bus interface circuit 32. FIFO buffer 30 receives and stores sequences of data from computer 12. Output terminals of FIFO buffer 30 are connected to data input terminals 34 of gate array 16. When an output signal produced at an output terminal 36 of gate array 16 successively output enables FIFO buffer 30, FIFO buffer 30 successively forwards each element of its stored data data sequence to input terminals 34 of the gate array.

As previously mentioned, computer 12 transmits configuration data to programming input terminals 18 of gate array 16 prior to communicating with a selected one of the output devices. The configuration data configures gate array 16 to act as a logic circuit performing various operations enabling computer 12 to communicate with the computer through bus 14 and to communicate with the selected output device through multiplexers 22 and 26. The configuration data also appropriately sets logic levels on various gate array 16 output terminals 40 and 42 connected to switching control inputs of multiplexers 22 and 26 so that these multiplexers connect output and input lines of the selected output device to input and output terminals 24 and 28 of logic array 16.

The specific configuration of the logic circuit implemented by gate array 16 depends on the nature of the interface required for each selected output device. However, the functional organization of the logic circuit illustrated in block diagram form within the dotted line representing gate array 16 is adequate for many types of output devices when the individual blocks are suitably configured. As illustrated in FIG. 1, a typical logic circuit implemented by gate array 16 includes a data handling circuit 38 connected between input terminals 34 and output terminals 28. Data handling circuit 38 receives data from computer 12 via FIFO buffer 30, converts the data to a form suitable for transmission to an external device, and then forwards the data to the selected external device via output multiplexer 26. A state machine 46 generates signals selecting and controlling various modes of circuit 38 operation.

Computer 12 may also write commands or other data into an addressable control register 48 by placing the data on bus 14 along the address of the control register. A decoder 52 implemented by gate array 16 decodes the address and input enables the appropriate control register 48. The contents of one control register may provide an additional input to data handling circuit 38. In one mode of operation, data handling circuit 38 may forward the command stored in that control register 48 to an output device via output multiplexer 26. Data stored in one or more other control registers 48 controls operation of state machine 46.

State machine 46 may transmit and receive handshaking signals when port 10 communicates with an output device. State machine 46 receives handshaking signals from an output device via input multiplexer 22, and transmits handshaking signals to the external device via output multiplexer 26. State machine 46 also generates the signal at output terminal 36 output enabling FIFO buffer 30, and may generate signals resetting or clearing various control registers 48 after reading their contents. An output circuit 50 receives and stores data transmitted from an output device via input multiplexer 22. In response to one or more output signals of state machine 46, interrupt circuit 54 transmits an interrupt signal (INT) to computer 12. Computer 12 responds to the interrupt signal by read accessing data stored in the interrupt circuit to determine the source of the interrupt and taking appropriate action, such as read accessing the data in output circuit 50.

Port 10 may have several modes of operation depending on the interface arrangement of the output device the port is presently configured to service. For example, in a data transmission mode, computer 12 sends a sequence of data to FIFO buffer 30, and port 10 forwards the data in FIFO buffer 30 to a selected output device via output multiplexer 26. Computer 12 first sends the data sequence for storage in FIFO buffer 30 and then sends control data to state machine 46 via control registers 48 setting state machine 46 for the data transmission mode. State machine 46 thereafter sequentially output enables FIFO buffer 30 so that it sends each word of the sequence stored in the FIFO buffer to data handling circuit 38. State machine 46 provides the appropriate control input signals to data handling circuit 38 causing the data handling circuit to appropriately convert each data word read out of FIFO buffer 30 to a form suitable for transmission to the output device and to transmit the converted data words to the output device via output multiplexer 26. State machine 46 also monitors input handshaking signals from the output device via input multiplexer 22, and transmits the appropriate output handshaking signals to the output device via output multiplexer 26 to effect data transmission to the output device.

Each data word of the data sequence stored in FIFO buffer 30 includes a bit indicating whether the data word is the last word of the sequence. As the port reads each data word of the sequence of the FIFO buffer, the end of sequence indicating bit is provided as input to state machine 46. The process of forwarding data from the FIFO buffer to the output device continues until state machine 46 encounters the end of sequence indicating bit in FIFO buffer 30. At this point state machine 46 signals interrupt circuit 54 to interrupt computer 12. Computer 12 then reads data in interrupt circuit 54 to determine the nature of the interrupt, and thereafter takes appropriate action, for example, sending another sequence to the FIFO buffer.

Port 10 may also operate in a command mode whereby the computer 12 sends a command to an output device. A command may, for example, set the output device for a particular mode of operation or may tell the output device to return data indicating status of its internal settings or alarms. Computer 12 stores the command in one of control registers 48 and sets appropriate command mode indicating data in another control register 48. In response, state machine 46 transmits control signals to data handling circuit 38 causing the data handling circuit to read the command out of a register 48, to convert the command to a form suitable to transmission to the output device, and to forward the converted command to the output device via output multiplexer 26.

A command may tell an output device to return data indicating status of current internal settings or alarms of the output device. In such event, state machine 46 causes output circuit 50 to store the status data and then interrupts computer 12 via interrupt circuit 54. In response to the interrupt, computer 12 reads data in interrupt circuit 54 indicating the nature of the interrupt, and then reads the status data stored in output circuit 50.

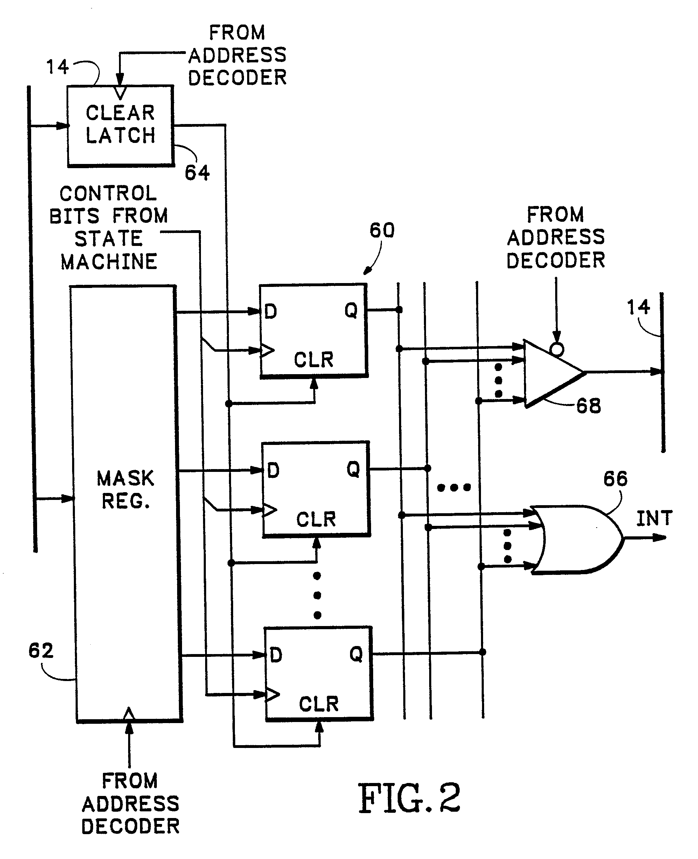

FIG. 2 shows a suitable interrupt circuit 54 in more detailed block diagram form. Computer 12 of FIG. 1 writes a mask data word into a mask register 62 via bus 14. Each bit in mask register 62 controls a D input of a separate type D flip-flop 60. The computer may clear each flip-flop 60 by placing a clear bit on one line of bus 14 and latching the bit onto clear inputs of flip-flops 60 via a latch 64. Latch 64 and register 62 are selectively enabled by address decoder 52 of FIG. 1 in response to particular addresses placed on bus 14. Indicating signal outputs of state machine 46 of FIG. 1 separately clock flip-flops 60. The Q outputs of flip-flops 60 each drive a separate input of an OR gate 66 generating the interrupt signal (INT). A tristate buffer 68 latches the Q outputs of flip-flops 60 onto separate lines of bus 14 when enabled by a signal from address decoder 52 of FIG. 1 in response to a particular address on bus 14.

Each bit of the mask data in mask register 62 may be set to a logical 1 when a corresponding control output bit of the state machine is to initiate an interrupt. When the state machine asserts a control signal output, it clocks one of the flip-flops 60, and the flip-flop sets its Q output if its D input is driven by a logical "1" bit in mask register 62. The Q output drives the interrupt signal high through OR gate 66. When the computer reads the output of tristate buffer 68, the particular bit of the buffer output that is a "1" tells the computer which signal output of the state machine initiated the interrupt. This enables the computer to determine the purpose of the interrupt and to take appropriate action.

In various modes of port operation the computer may not want to service certain interrupts. The computer can prevent any particular control output signals of the state machine from initiating an interrupt by setting to a logical "0" the bit in mask register 62 controlling the D input of the flip-flop 60 clocked by the state machine output signal.

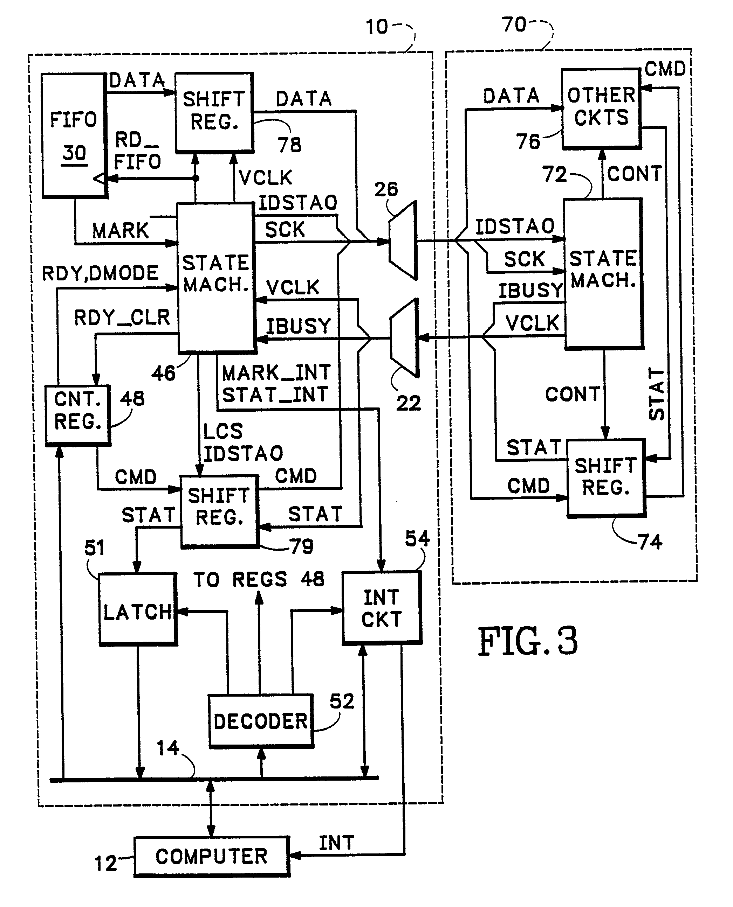

While the specific internal configuration and operation of the various blocks implemented by gate array 16 of FIG. 1 depends on the interface arrangement of the output device being serviced, a detailed illustration of an example configuration of gate array 16 for a particular output device is helpful to the understanding of the invention. Accordingly, FIG. 3 illustrates detailed configuration of port 10 when providing an interface between computer 12 and an example external device 70. Device 70 may be, for example, a printer including a state machine 72, a bi-directional, serial-parallel, parallel-serial shift register 74 and other circuits 76 for controlling printer operation in response to input data and for generating output data indicating printer status in response to a command from the computer.

In one mode of operation, shift register 74 receives an 8-bit command (CMD) in serial form from port 10, converts the command to an 8-bit parallel data word, and forwards it to circuits 76. The command may, for example, tell circuits 76 to return an 8-bit status word (STAT) indicating current status of internal settings or alarms of the output device. In another mode of operation, shift register 74 stores an 8-bit parallel status word STAT from circuits 76 and then sends it in serial form to port 10. State machine 72 generates signals controlling movement of data through shift register 74 and in and out of circuits 76. State machine 72 also transmits two handshaking output signals IBSY0 and VCLK to port 10 and receives two handshaking input signals IDSTA0 and SCK from port 10.

In this example, data handling circuit 38 of FIG. 1 consists of two shift registers 78 and 79. Shift register 78 receives a parallel data word (DATA) from FIFO buffer 30 and sends it to output device 70 in serial form via output multiplexer 26. In one mode of operation shift register 79 reads a command (CMD) out of a control register 48 and transmits it in serial form to output device 70 via output multiplexer 26. In another mode of operation, shift register 79 receives and stores an 8-bit serial status word (STAT) from output device 70 via input multiplexer 22. In the present configuration, output circuit 50 of FIG. 1 is implemented as a latch 51 for latching the 8-bit parallel STAT word stored in shift register 79 onto data lines of bus 14 in response to a signal from decoder 52.

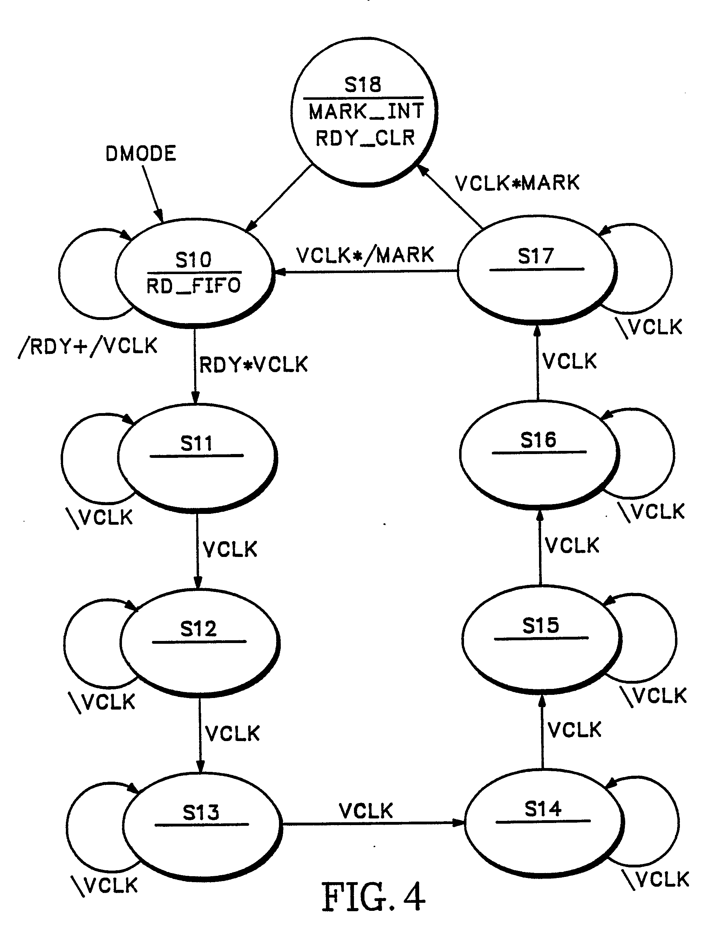

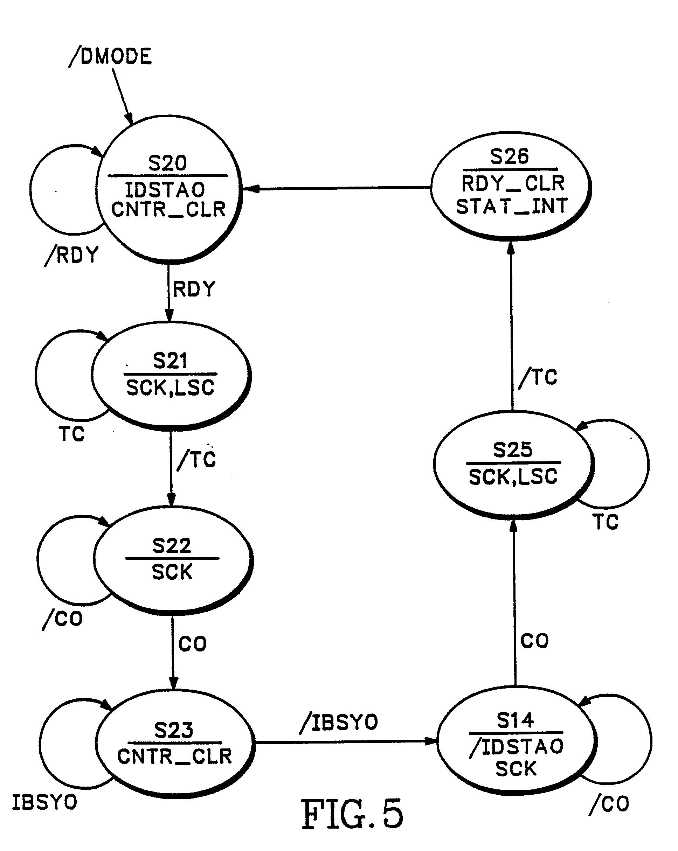

FIGS. 4 and 5 are state diagrams illustrating alternative data transmission and command/status modes of operation of state machine 46 of FIG. 3. FIG. 4 illustrates the data transmission mode of operation wherein port 10 transmits a sequence of data from FIFO buffer 30 to output device 70. Referring to FIGS. 3 and 4, computer 12 initially transmits a data sequence to FIFO buffer 30 via bus 14 and bus interface circuit 32. Computer 12 then stores control data in control registers 48. The state of one bit (DMODE) of the control data in a register 48 tells state machine 46 whether to operate in the data transmission mode or in the command/status mode. Another bit RDY in control register 48 tells state machine 46 to start operating in the current mode.

Referring to FIGS. 3 and 4, state machine 46 enters a state S10 when the DMODE signal is first driven true. While in state S10 state machine 46 asserts the RD_FIFO signal output enabling FIFO buffer 30 so that buffer 30 forwards a stored data word (if any) to shift register 78. The RD_FIFO signal also input enables shift register 78 so that it stores the data word from the FIFO buffer. State machine 72 of output device 70 asserts the VCLK handshaking signal when circuits 76 are ready to receive a next DATA bit. Output multiplexer 26 supplies the VCLK signal as input to state machine 46 and state machine 46 forwards VCLK to a control terminal of shift register 78. Whenever state machine 72 asserts the VCLK signal, shift register 78 shifts out a next bit of its stored DATA word and transmits the bit to circuits 76 via output multiplexer 26. State machine 46 remains in state S10 as long as either the RDY bit or the VCLK signal are deasserted. (In FIGS. 4 and 5 a "/" symbol preceding a signal name indicates the signal is false or deasserted. Thus, "/RDY" means the RDY signal is false while "RDY" means the RDY signal is true.)

When state machine 46 detects both RDY and VCLK signals are true, it moves to state S11 and waits until VCLK is again asserted. In response to the next six successive assertions of the VCLK signal, state machine 46 steps through a set of five states S12-S17. Upon reaching state S17, a total of seven bits of the eight DATA word bits stored in shift register 78 have been transmitted to the output device 70. On the next assertion of VCLK, the last bit in shift register 78 is sent to output device 70.

Computer 12 sets true a "MARK" bit accompanying the last data word in FIFO buffer 30 to mark the end of a data sequence, and the MARK bit provides input to state machine 46. When state machine 46 does not detect a true MARK bit in FIFO buffer 30, it returns from state S17 to state S10 where it reasserts the RD_FIFO signal to transfer another data word from FIFO buffer 30 to shift register 78. Since the RDY bit is still true, the state machine again cycles through states S10-S17 as shift register 78 shifts out the first seven bits of the next data word.

When in state S17, state machine 46 detects the MARK bit is set true, it switches to state S18 on the next assertion of the VCLK signal. In state S18 state machine 46 asserts the RDY_CLR signal, thereby setting the RDY bit in control register 48 false. Also in state S18, the state machine transmits a MARK_INT signal to interrupt circuit 54. This signal causes interrupt circuit 54 to transmit the interrupt (INT) signal to computer 12. Computer 12 responds by reading data out of interrupt circuit 54 indicating that the MARK_INT signal caused the interrupt. This tells computer 12 that port 10 has completed transmitting the data sequence stored in FIFO buffer 30 to output device 70. After state S18, state machine 46 returns to state S10. At this point RDY is false. The state machine remains in state S10 until the computer loads more data in the FIFO buffer 30 and sets the RDY signal true again.

FIG. 5 illustrates the command/status mode of operation of port 10 of FIG. 3 wherein computer 12 transmits a command to output device 70 via port 10 and output device 70 responds by returning status data to the computer via port 10. Referring to FIGS. 3 and 5, computer 12 initially stores a data word (CMD) including the command in a control register 48 of port 10. Computer 12 then sets the DMODE bit in a control register 48 false to tell state machine 46 to operate in the command/status mode. Thereafter, the computer sets the RDY bit in a control register 48 true.

State machine 46 enters a state S20 when the DMODE signal is first driven false. While in state S20 state machine 46 asserts the IDSTA0 signal telling state machine 72 of output device 70 a CMD data word is to flow from output port 10 to shift register 74. The IDSTA0 signal also controls the direction of flow of data through shift register 79. When asserted, the IDSTA0 signal enables shift register 79 so that it stores the CMD data word from control register 48. In state S20 state machine 46 also asserts a CNTR_CLR signal used internally to reset two counts TC and CO discussed hereinbelow.

When state machine 46 detects a true RDY bit in a control register 48, the state machine switches to state S21 where it asserts the SCK signal and an LSC signal. The LSC signal shifts the first bit of the CMD word out of shift register 79. This first CMD word data bit flows through output multiplexer 26 to shift register 74 of output device 70. The SCK signal output of state machine 46 passes through output multiplexer 26 to state machine 72 and causes state machine 72 to generate control signals shifting the CMD data word bit into shift register 74. During the next eight clock cycles, state machine 46 increments its internal TC count from 0 to 8. When the TC count reaches 8, a TC bit goes false. As long as TC remains true, state machine 46 continues to remain in state S21, reasserting the SCK and LSC signals eight times to sequentially shift the eight CMD word data bits out of shift register 79 and into shift register 74.

When the TC bit goes false, state machine 46 moves to state S22. The state machine increments another count and asserts the SCK signal during each system clock cycle while remaining in state S22. When the count reaches 2, it sets a CO bit true. The true CO bit causes the state machine to move to state S23. Thus, in state S22 state machine 46 sends two additional SCK signal pulses to state machine 72. State machine 46 then enters state S23 where it asserts the CNTR_CLR signal to reset the TC and CO counts.

The two SCK signal pulses transmitted to state machine 72 while state machine 46 is in state S22 cause state machine 72 to deassert the IBSY0 signal and to transfer the CMD word out of shift register 74 and into circuits 76. Circuits 76 respond to the command by generating a STATUS word for input to shift register 74. State machine 72 stores the STATUS word in shift register 74 and then reasserts the IBSY0 signal causing state machine 46 to move to state S24. On entering state S24, state machine 46 deasserts the IDSTA0 to tell state machine 72 that it is to commence sending bits of the STAT data word to shift register 79. The deasserted IDSTA0 signal also tells shift register 79 it is to begin shifting in STAT data word bits. State machine 46 remains in state S24 reasserting the SCK signal on each clock cycle and incrementing the CO count until the CO count reaches 2. State machine 46 then moves to state S25 wherein it increments the TC count and reasserts the SCK and LSC signals during each system clock cycle until the TC count reaches 8. Each pulse of the SCK signal tells state machine 72 to shift out a bit of the STAT data in shift register 74 and each pulse of the LSC signal tells shift register 79 to shift in the STAT data bit. When the TC count reaches 8, the TC bit goes false and the state machine 46 moves to state S26 where it asserts a STAT_INT signal and asserts the RDY_CLR signal, thereby setting the RDY bit in control registers 48 false. State machine 46 then re-enters state S20 where it awaits reassertion of the RDY bit indicating computer 12 has another command to send to output device 70.

The STAT_INT signal asserted in state S26 causes interrupt circuit 54 to interrupt computer 12. In response to the interrupt, computer 12 reads the interrupt data out of interrupt circuit 54 and determines the interrupt was caused by the STAT_INT signal. The computer 12 thereupon reads the STAT data word in shift register 79 by enabling latch 51 via decoder 52, thereby to place the 8-bit STAT data word stored in shift register 79 on bus 14. This completes a command/status mode operation.

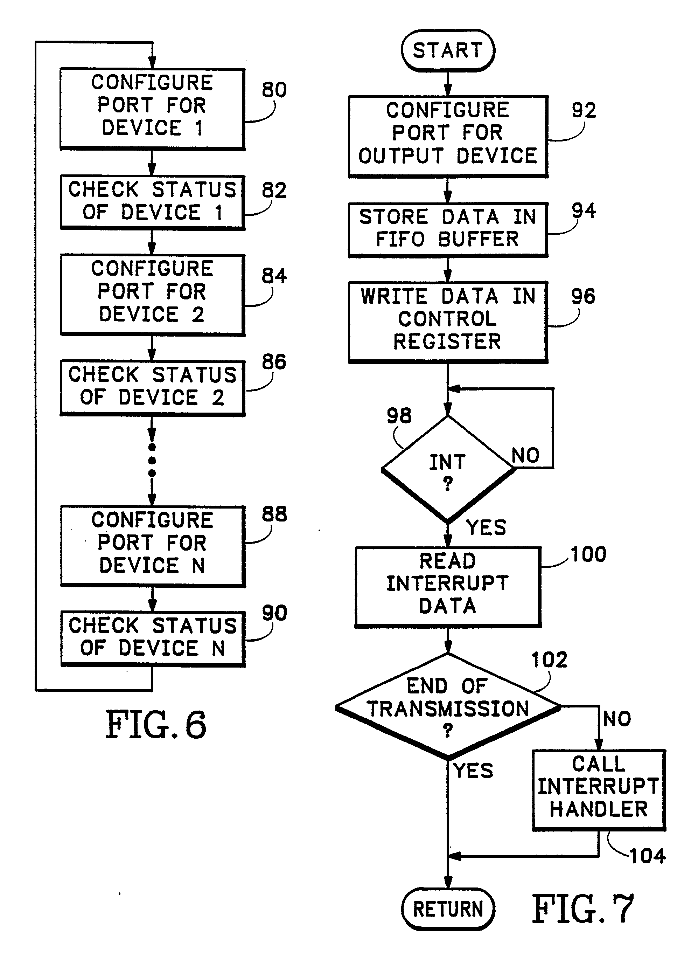

FIG. 6 is a flow chart for an idle routine executed by computer 12 as a background process for monitoring status of a set of N devices serviced by port 10 of FIG. 1. Referring to FIGS. 1 and 6, at step 80 computer 12 configures port 10 for communicating with a first output device (device 1) by transmitting appropriate programming data to programming terminals 18 of gate array 16. Computer 12 then checks the status of device 1 (step 82) by transmitting a command to the device via port 10, waiting for an interrupt signal from the port, determining the nature of the interrupt from the data in interrupt circuit 54, and then reading the returned status data from output circuit 50. The computer then configures the port for communicating with output device 2 (step 84) and checks the status of device 2 (step 86) in a manner similar to steps 80 and 82. The process continues with the computer successively configuring the port to communicate with each successive output device and then checking the status of the device. After the computer has configured the port to communicate with device N (step 88) and has checked the status of device N (step 90), it returns to step 80 to repeat the process.

Computer 12 may execute one or more other processes concurrently with the idle routine of FIG. 6 and these processes may transmit data to a selected output device via port 10 of FIG. 1. When a process executed by computer 12 wishes to transmit data to an output device, the idle routine of FIG. 6 is interrupted after completion of the next "check status" step and the computer executes the interrupt routine of FIG. 7 prior to resuming the idle routine. Referring to FIGS. 1 and 7, the computer first configures port 10 for communicating with the selected output device (step 92) by sending appropriate programming data to programming terminals 18 of gate array 16. The computer then writes data to be transmitted to the output device into FIFO buffer 30 (step 96) and sets the appropriate control data in control registers 48 to tell state machine 46 to begin transferring data from FIFO buffer 30 to the output device. The computer waits at step 98 until it detects the INT interrupt signal indicating port 10 has completed the data transfer and then verifies the source of the interrupt by reading interrupt data out of output circuit 50 (step 100). If the INT signal was caused for some reason other than completion of data transmission (step 102), computer 12 calls an appropriate interrupt handling routine (step 104) before returning to the idle routine of FIG. 6. Otherwise the computer returns directly to the idle routine.

The reconfigurable port as described hereinabove selectively provides an interface between a computer and any one of several output devices requiring differing interface arrangements. In the preferred embodiment the port includes a programmable gate array providing the necessary handshaking, data routing and conversion logic for the port. Before communicating with a selected output device through the port, the computer sends programming data to the gate array appropriately configuring the port.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the invention.

## Claims

1. A port for alternatively providing an interface between a computer and any selected one of a plurality of output devices requiring differing interface arrangements for receiving data from said computer, said port comprising:
a plurality of input terminals for receiving input data from said computer;
a plurality of output terminals for transmitting output data to said computer;
a plurality of logic elements; and
means receiving programming data from said computer for adjustably interconnecting said input terminals, said output terminals and said logic elements in accordance with said programming data such that said ones of said logic elements act in concert to forward input data received from said computer at said input terminals as output data to any selected one of said output devices via said output terminals in accordance with an interface arrangement required by the selected one of said output devices.

2. A port for alternatively conveying data from a computer to any selected one of a plurality of output devices requiring differing interface arrangements for receiving data, said port comprising:

means configurable by programming data for executing operations defined by said programming data;

first means coupling said configurable means to said computer for conveying said programming data and input data from said computer to the configurable means; and

second means connecting said configurable means to said plurality of output devices for conveying output data from said configurable means to any selected one of said output devices,

wherein said operations defined by said programming data comprise forwarding input data received from said computer to said selected one of said plurality of output devices via said second means in a manner consistent with an interface arrangement required by said selected one output device.

3. The port in accordance with claim 2 wherein said configurable means comprises:

a plurality of input terminals for receiving said input data;

a plurality of output terminals for transmitting said output data;

a plurality of logic elements for carrying out logic operations; and

means receiving said programming data for adjustably interconnecting said input terminals, said output terminals and said logic elements such that the interconnected logic elements perform said operations defined by said programming data.

4. The port in accordance with claim 2 wherein said second means comprises multiplexing means coupling said configurable means to said plurality of output devices for conveying output data from said configurable means to any selected one of said plurality of output devices, and wherein said operations defined by said programming data further comprise providing an output signal to said multiplexing means for controlling selection by said multiplexing means of one of said output devices for receiving said output data.

5. The port in accordance with claim 2 wherein said first means comprises:

buffer means connected to said configurable means for storing a sequence of data elements and for successively forwarding each element of said sequence as input data to said configurable means; and

bus means interconnecting said buffer means and said computer for conveying said data sequence from said computer to said buffer means for storage therein.

6. A port for alternatively providing an interface between a computer and any selected one of a plurality of output devices requiring differing interface arrangements for receiving data from said computer, said port comprising:

a plurality of input terminals;

means for conveying input data and programming data from said computer to ones of said plurality of input terminals;

a plurality of output terminals;

multiplexing means for connecting ones of said output terminals to any selected one of said plurality of output devices;

a plurality of logic elements; and

means responsive to said programming data received by said input terminals for adjustably interconnecting ones of said input terminals, output terminals and logic elements in accordance with said programming data such that said ones of said logic elements act in concert to forward input data received from said computer at said input terminals to the selected one output device via said multiplexing means consistent with an interface arrangement of said selected one output device.

7. The port in accordance with claim 6 wherein said means for conveying comprises: .

buffer means connected to ones of said input terminals for storing a sequence of data elements and for successively forwarding each element of said sequence as input data to said ones of said input terminals; and

bus means interconnecting said buffer means and said computer for conveying said data sequence from said computer to said buffer means for storage therein.

8. A port for alternatively providing an interface between a computer and a selected one of a plurality of output devices having differing interface arrangements for transmitting and receiving data to and from said computer, said port comprising:

means configurable by programming data for executing operations defined by said programming data;

first means coupling said configurable means to said computer for conveying input data and said programming data from said computer to the configurable means and for conveying output data from said configurable means to said computer; and

second means for conveying output data from said configurable means to any selected one of said plurality of output devices and for conveying input data from said selected one of said plurality of output devices to said configurable means,

wherein said operations defined by said programming data comprise forwarding input data received from said computer to the selected output device via said second means in a manner compatible with an interface arrangement required by the selected output device.

9. The port in accordance with claim 8 wherein said operations defined by said programming data further comprise receiving input data conveyed from said selected one of said plurality of output devices via said second means in a manner compatible with the interface arrangement required by the selected output device.

10. The port in accordance with claim 8 wherein said configurable means comprises:
a plurality of input terminals for receiving said input data;
a plurality of output terminals for transmitting said output data;
a plurality of logic elements for carrying out logic operations; and
means receiving said programming data from said computer for adjustably interconnecting said input terminals, said output terminals and said logic elements such that the interconnected logic elements perform said operations defined by said programming data.

11. A port for alternatively providing an interface between a computer and any one of a plurality of output devices requiring differing interface arrangements for transmitting and receiving data to and from said computer, said port comprising:
a plurality of input terminals for receiving input data from said computer and from said output devices;
a plurality of output terminals for transmitting output data to said computer and to said output devices;
a plurality of logic elements; and
means receiving programming data from said computer for adjustably interconnecting ones of said input terminals, said output terminals and said logic elements in accordance with said programming data such that said ones of said logic elements act in concert to forward input data received from said computer at said input terminals to a selected one of said output devices via said output terminals in accordance with an interface arrangement required by said selected one of said output devices, and to forward to said computer via said output terminals input data transmitted by said selected one of said output devices to ones of said input terminals in accordance with said interface arrangement required by said selected one output device.

12. In a system comprising a computer, a plurality of output devices requiring differing interface arrangements for communicating with a computer, and a port configurable by input programming data for alternatively providing an interface between said computer and any selected one of said plurality of output devices in accordance with the interface arrangement required by the selected output device, a method for said computer for communicating with ones of said plurality of output devices comprising the steps of:
transmitting programming data to said port configuring said port for interfacing said computer to one of said output devices in accordance with the interface arrangement required by said one output device;
communicating with said one output device through said port;
transmitting programming data to said port reconfiguring said port for interfacing said computer to another one of said output devices in accordance with a differing interface arrangement required by said another one of said output devices; and
communicating with said another one of said output devices through said port.

FIG.1

FROM
ADDRESS
DECODER

14

CLEAR
LATCH

64

CONTROL
BITS FROM
STATE
MACHINE

60

FROM
ADDRESS
DECODER

14

D      Q

CLR

68

MASK
REG.

D      Q

CLR

66

INT

62

D      Q

CLR

FROM
ADDRESS
DECODER

FIG.2

FIG. 3

FIG. 4

FIG.5

CONFIGURE
PORT FOR
DEVICE 1  —80

CHECK STATUS
OF DEVICE 1  —82

CONFIGURE
PORT FOR
DEVICE 2  —84

CHECK STATUS
OF DEVICE 2  —86

CONFIGURE
PORT FOR
DEVICE N  —88

CHECK STATUS
OF DEVICE N  —90

FIG. 6

START

CONFIGURE
PORT FOR
OUTPUT DEVICE  —92

STORE DATA IN
FIFO BUFFER  —94

WRITE DATA IN
CONTROL
REGISTER  —96

98  INT ?  NO

YES

READ
INTERRUPT
DATA  —100

END OF
TRANSMISSION
?  102  NO

YES

CALL
INTERRUPT
HANDLER  —104

RETURN

FIG. 7